# EUROPEAN PATENT SPECIFICATION

(11) **EP 2 152 067 B1**
(45) Date of publication and mention of the grant of the patent: **20.07.2011**
(21) Application number: 08753788.2
(22) Date of filing: 23.05.2008
(51) Int. Cl.: A01K 61/00

(54) **Device for cleaning windows, more particularly the interior surface of aquarium windows**
Vorrichtung zum Reinigen von Fenstern, insbesondere der Innenfläche von Aquariumfenstern
Dispositif de nettoyage des vitres, plus particulièrement la surface interne des parois d'un aquarium

(30) Priority: 24.05.2007 EP 07075394
(43) Date of publication of application: 17.02.2010
(73) Proprietor: Goudsmit Magnetic Supplies BV, 5582 HB Waalre (NL)
(72) Inventor: MOAYERI, Hossein, NL-3762 VM Soest (NL)
(74) Representative: Verhees, Godefridus Josephus Maria
(86) International application number: PCT/NL2008/050306
(87) International publication number: WO 2008/143511

(56) References cited:
- US-A1- 2007 107 665

## Description

### Field of the invention.

The invention relates to a device for cleaning windows, more particularly the interior surface of aquarium windows, the device comprising a wiper having a wipe side with thereon a wiping layer, and an actuator, which when in use are each positioned on either side of the window and face each other and the wiper and the actuator attract each other by means of a magnetic force, while the wiper positioned on the other side of the window with the wipe side against the window is moved along when the actuator is displaced, the wiper is a body having a mean mass density that is greater than that of the liquid in which the wiper is used.

### State of the art.

A device of this type is known from US 2007/107665 A1. In this known device the magnetic force functions as an adhesive force that is so great that when either of the two, that is, the wiper or the actuator or holder, is displaced along the window, the other one is displaced with it. In this way the displacement of the actuator leads to the displacement of the wiper while by means of the wiper plane or the wiping surface of the wiper on the window side thereof the window is cleaned along the path covered by the wiper. With suitably selected material for such a wipe side, wiper plane or wiping surface, the window will be disposed of impurities. When too much pressure is exerted on the actuator or holder or too much pulling power is exerted on the actuator or holder, said magnetic force will not be large enough to keep the wiper against the window, so that it will come loose from the window and then sink to the bottom of for example an aquarium, or will continue to float. In all cases it will take time and effort to restore the wiper - actuator combination (wiper - holder combination), for example in said aquarium either by fishing the wiper out of the aquarium or causing the floating half to move towards the window again. More particularly for such a floating wiper the magnets used will have to have a relatively strong magnetic force to be in a position to be pulled towards one of the aquarium windows when floating away. This implies either more expensive magnetic materials to slightly restrict the bulkiness thereof, or relatively large floating wipers to compensate therewith the weight of the relatively large magnets.

### Summary of the invention.

It is an object of the invention to provide a device of the type defined in the opening paragraph in which the uncontrolled sinking to the bottom, or awkward floating away, is avoided or at any rate diminished. For this purpose, the device according to the invention is characterized in that the wiper comprises magnetic units on the wipe side and a ballast unit on the opposite side, said ballast unit is mounted off centre, so that the wiper is a body having a mean mass density that is greater than that of the liquid in which the wiper is used, the wiper having a moment of inertia at which at least a single tilting movement is carried out when said attractive force is terminated and a rotation is followed and an angle is formed with the horizontal direction while the wipe side is disposed at a side that is substantially turned away from a plane in the horizontal direction.

It is thus achieved in suitable manner that the falling movement or translation, that is to say, the sinking, is slowed down considerably and thus the time is increased during which measures can be taken to fetch the wiper back to the window again, so that for the operator the ease of operation is enhanced.

In addition, said measure advantageously achieves that the wipe side itself will not end up on the bottom of said aquarium and thus be soiled by the materials such as sand and/or gravel usually present on such a bottom.

In addition, there may be advantageously achieved that with a tilting movement of this type the wiper turns such that when it sinks down it will remain in the neighbourhood of the wall against which it was initially stuck magnetically.

In still other embodiments the device according to the invention is characterized in that the wiping layer is mounted facing the off-centre ballast unit up to a predetermined distance away from the end of the wipe side, and in that the mean mass density of the wiper is at most 110 % of the mass density of said liquid.

### Brief description of the drawings.

The invention will be described in more detail based on an example of embodiment of the device according to the invention shown in the drawings while reference is made to the appended drawing figures, in which:
Fig. 1 gives a schematic representation of an aquarium with a wiper - holder combination on one of the windows;
Fig. 2 shows a cross-section of a wiper according to the invention;
Fig. 3 shows a cross-section of the wiper shown in Fig. 2 which is given a quarter of a turn at ballast unit level; and
Figs. 4A, 4B and 4C show situations of the wiper becoming released from the holder and the wiper sinking to the bottom.

### Detailed description of the drawings.

In the drawing Figures like component parts have like numerals.

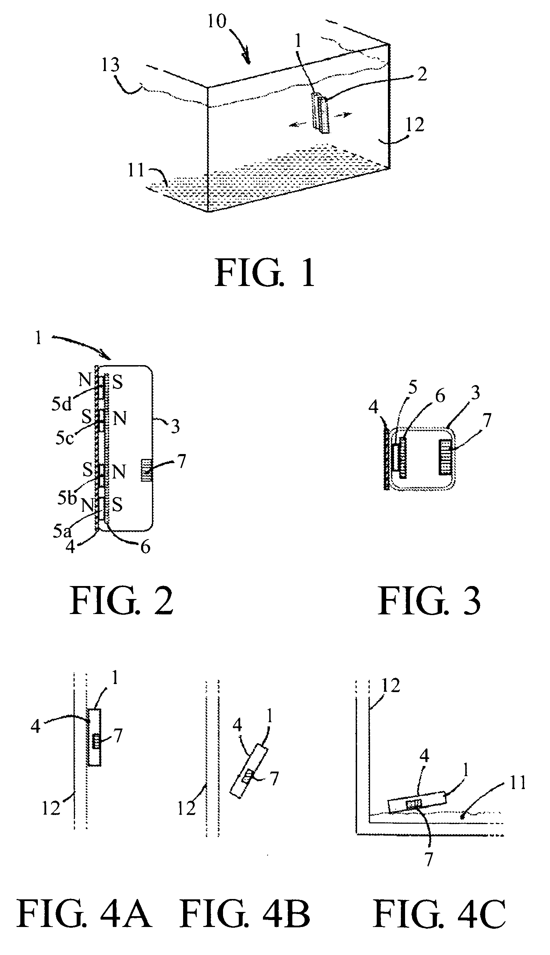

Fig. 1 gives a schematic representation of an aquarium 10 with a wiper - holder combination on one of the walls, the combination being formed by a wiper 1 and a holder 2. Furthermore, the aquarium 10 comprises a bottom 11 and walls 12 and the aquarium is filled with a liquid 13. The walls and bottom of such an aquarium are generally made of a transparent material such as glass or a suitable plastic material, the bottom being covered by a layer of sand or gravel and the liquid being water or water supplemented by tiny concentrations of nutrients or minerals on which fish generally flourish. In this drawing Fig. 1 the wiper - holder combination is moved in a direction for cleaning or wiping the respective wall.

Fig. 2 shows a more detailed version of a cross section of wiper 1. A housing 3, generally made of a suitable plastic material with an elongated form in the direction shown, as can be recognized from Fig. 1, comprises against one of the sides in this case the side of the wiper, a wiping layer 4 and in the housing itself magnetic elements 5a, b, c and d, a magnetic short-circuit strip 6 and a ballast unit 7.

The magnetic elements 5a, b, c and d are more particularly made of materials for permanent magnets known to the expert, for example SmCo alloys, magnetized iron - Ni alloys etc. In the example of embodiment shown here magnet poles N and S (North and South respectively) are used as indicated, the poles being short-circuited in known manner by a short-circuit strip 6 of ferromagnetic material. The holder 2 shown only in Fig. 1 will have on a respective side also a pattern of magnets that is the magnetic image of the holder shown in Fig. 2, so as to bring about suitable attractive operation with any position of holder and wiper. It will be evident to the expert that further suitable patterns, configurations and symmetries for positions of magnetic elements 5 can be chosen for wiper 1 and holder 2, depending on the properties (mass, magnetic force) of these elements 5. Furthermore, the choice can also be determined by the thickness of the walls 12 of an aquarium 1 of this type.

The ballast unit 7 in the cross section shown is disposed on the other side facing the wipe side, positioned off centre. It will be evident to the expert that the masses of said component parts in conjunction with their positions when sinking determine the kinetics of such a body as a result of its moment of inertia, more particularly the pattern of rotation and the falling movement or translation. Furthermore, it will be evident to the expert that for the movement the structure of the material used for the housing 3 in conjunction with the liquid used will be prescriptive to the dynamics of the system, more particularly, in dependence on friction properties and viscosity.

Fig. 3 shows a cross section of the wiper as shown in Fig. 2 which is given a quarter turn at the level of a ballast unit 7. It will be evident to the expert that the width of the ballast unit 7 and the placement and positioning against an aquarium wall is again decisive for the pattern of movements during the sinking. Furthermore, patterns of ballast units 7 may be selected to accordingly fine-tune the kinetics.

The wiping layer 4 is chosen to be of a material that during the wiping operation takes along and absorbs the materials and substances, for example algae, deposited on the aquarium walls. A frequently used material is felt. Also well-chosen synthetics may have properties suitable for this purpose.

In a further embodiment the wiping layer 4 may be dimensioned such that it does not run on to the end, the ballast unit being disposed opposite this end. The advantage of this is that with an oblique end position the wiping layer will never end up in the material 11 present on the bottom, generally sand or gravel, and thus the wiper 1 itself will not be soiled too much and too quickly and thus become impossible to work with.

As stated hereinbefore, the liquid will generally be water having an appropriate mass density. The choice of the mean mass density of the wiper 1 is selected to be little more than that of the liquid used and is advantageous in that it sinks in a slowed-down manner and scarcely floats away and thus sinks close to the wall.

Figs. 4A, 4B and 4C schematically show situations in which the wiper 1 becomes detached from the holder 2 and the wiper sinks to the bottom 11 of the aquarium 10. To be most precise, the ballast unit in this example is positioned off centre of the wiper 1.

In Fig. 4A the situation is shown at the moment of detachment of the wiper 1 while it is still just against a wall 12.

In Fig. 4B both a turning by a certain angle has taken place and the wiper 1 has sunk over a small height distance.

In Fig. 4C the wiper 1 has ended up on the bottom 11 after having been turned even more.

It will be evident to the expert that with this turning the chance of the wiping layer 4 ending up on the bottom 11 is absent, more specifically for the case where no larger objects, for example, rocks or plants, affect the sinking path. In addition, a wiper according to the present invention will always of its own accord tend to turn into the desired direction with the wiping layer 4 pointing upwards. Furthermore, in another position of the ballast unit 7, for example, more to the end, the angle of turn will be smaller and the final position will be more vertical for the situations shown in these drawing Figures. The position may even be such that the sinking takes place in essence vertically downwards and the re-formation of the wiper - holder combination is simplified in this manner. In general, a different initial situation from that represented in Fig. 1 will cause a different sinking path to be followed, always determined by the factors mentioned above, such as moment of inertia and properties of the liquid.

A further advantage of this wiper - holder combination according to the present invention is the quick re-formation of the combination when wiping or cleaning a first wall and going on to an adjacent wall takes place. Momentary release, then sinking along the wall for some moments and being attracted again from the adjacent wall can be effected in an easy manner.

Albeit the invention has been described in the foregoing with reference to the drawings, it should be pointed out that the invention is not by any manner or means restricted to the embodiments shown in the drawings. The invention also extends over any embodiment deviating from the embodiment shown in the Figures within the scope defined by the claims.

## Claims

1. A device for cleaning windows, more particularly the interior surface of aquarium windows (12), the device comprising a wiper (1) having a wipe side with thereon a wiping layer (4), and an actuator (2), which when in use are each positioned on either side of the window and face each other and the wiper and the actuator attract each other by means of a magnetic force, while the wiper positioned on the other side of the window with the wipe side against the window is moved along when the actuator is displaced, wherein the wiper (1) is a body having a mean mass density that is greater than that of the liquid (13) in which the wiper is used, **characterized in that** the wiper comprises magnetic units (5a-5d) on the wipe side and a ballast unit (7) on the opposite side, said ballast unit is mounted off centre, so that the wiper has a moment of inertia at which at least a single tilting movement is carried out when said attractive force is terminated and a rotation is followed and an angle is formed with the horizontal direction while the wipe side is disposed at a side that is substantially turned away from a plane in the horizontal direction.

2. A device as claimed in claim 1, **characterized in that** the wiping layer (4) is mounted facing the off-centre ballast unit (7) up to a predetermined distance away from the end of the wipe side.

3. A device as claimed in any one of the preceding claims, **characterized in that** the mean mass density of the wiper (1) is at most 110 % of the mass density of said liquid.

## Patentansprüche

1. Vorrichtung für die Reinigung der Innenfläche von Glasscheiben, beispielsweise Aquariumscheiben (12), bestehend aus einem Wischer (1) mit einer Wischerseite, die mit einer Wischerfläche (4) versehen ist, sowie einem Zieher (2), die bei Gebrauch je auf einer Seite der Scheibe einander gegenüber positioniert werden, wobei der Wischer und der Zieher einander durch eine Magnetkraft anziehen, wobei beim Verschieben des Ziehers der auf der anderen Seite befindliche Wischer, der mit der Wischerseite an die Scheibe gepresst wird, mitgeführt wird und wobei es sich bei dem Wischer (1) um einen Körper mit einer durchschnittlichen Massendichte handelt, die größer ist als die der Flüssigkeit (13), in der der Wischer benutzt wird, **dadurch gekennzeichnet, dass** der Wischer auf der Wischerseite ein Magnetelement (5a-5d) und auf der gegenüberliegenden Seite eine Ballasteinheit (7) umfasst, die außermittig angebracht ist, so dass der Wischer ein Trägheitsmoment besitzt und bei Aufhebung der oben stehend erwähnten Anziehungskraft mindestens eine einfache Kippbewegung ausgeführt wird, wobei der Wischer eine Drehung vollführt und eine im schrägen Winkel zur Horizontalen angeordnete Stellung einnimmt, in der sich die Wischerseite auf einer Seite befindet, die von einer horizontal ausgerichteten Ebene hauptsächlich abgewendet ist.

2. Vorrichtung nach Anspruch 1, **dadurch gekennzeichnet, dass** die Wischerfläche (4) gegenüber der außermittig angeordneten Ballasteinheit (7) bis zu einem vorgewählten Abstand zum Ende der Wischerseite reicht.

3. Vorrichtung nach einem der vorangegangenen Ansprüche, **dadurch gekennzeichnet, dass** die durchschnittliche Massendichte des Wischers (1) höchstens 110 Prozent der Massendichte der erwähnten Flüssigkeit beträgt.

## Revendications

1. Dispositif destiné au nettoyage de vitres, par exemple de faces intérieures de vitres d'aquarium (12), comprenant un grattoir (1) avec un côté grattant comprenant une face grattante (4) et un actionneur (2), qui sont utilisés chacun d'un côté de la vitre et positionnés l'un en face de l'autre et où le grattoir et l'actionneur s'attirent mutuellement au moyen d'un force magnétique, où en déplaçant l'actionneur, le grattoir positionné de l'autre côté, avec le côté grattant contre la vitre, est entraîné, où le grattoir (1) est un corps avec une masse spécifique moyenne supérieure à celle du liquide (13) dans lequel le grattoir est utilisé, **caractérisé en ce que** le grattoir comprend un élément magnétique (5a-5d) du côté grattant et une unité de ballast (7) de l'autre côté, laquelle unité de ballast est fixée de manière décentrée, de sorte que le grattoir a un moment d'inertie, où en cas d'interruption de l'attraction citée, au moins un seul mouvement de basculement est exécuté, suivi d'une rotation et où un angle est occupé par le sens horizontal, où le côté grattant se situe d'un côté principalement détourné d'une surface dans le sens horizontal.

2. Dispositif selon la revendication 1, **caractérisé en ce que** la face grattante (4) est fixée en face de l'unité de ballast (7) décentrée jusqu'à une distance préalablement choisie de l'extrémité du côté grattant.

3. Dispositif selon l'une des revendications précédentes, **caractérisé en ce que** la masse spécifique moyenne du grattoir (1) s'élève au plus à 110% de la masse spécifique du liquide cité.
